# EUROPEAN PATENT SPECIFICATION

(11) **EP 4 154 369 B1**
(45) Date of publication and mention of the grant of the patent: **14.10.2026**
(21) Application number: 21733614.8
(22) Date of filing: 21.05.2021
(51) Int. Cl.: H02H 3/20, G06F 13/42, H01R 13/66, H02H 9/04

(54) **OVERVOLTAGE PROTECTION SCHEME FOR CONNECTOR PORTS**
ÜBERSPANNUNGSSCHUTZSCHEMA FÜR VERBINDERANSCHLÜSSE
PLAN DE PROTECTION CONTRE LES SURTENSIONS POUR PORTS DE CONNECTEUR

(30) Priority: 22.05.2020 US 202063029322 P; 20.05.2021 US 202117325463
(43) Date of publication of application: 29.03.2023
(73) Proprietor: QUALCOMM INCORPORATED, San Diego, California 92121-1714 (US)
(72) Inventor: DHANASEKARAN, Vijayakumar, San Diego, California 92121-1714 (US)
(74) Representative: Carstens, Dirk Wilhelm
(86) International application number: PCT/US2021/033741
(87) International publication number: WO 2021/237142

(56) References cited:
- US-A1- 2017 155 214
- US-A1- 2020 112 167
- US-A1- 2020 125 519

## Description

### CROSS-REFERENCE TO RELATED APPLICATION

### BACKGROUND

### Field of the Disclosure

Certain aspects of the present disclosure generally relate to electronic circuits and, more particularly, to overvoltage protection circuits and techniques.

### Description of Related Art

Electronic circuits are designed to operate with certain maximum voltages at different nodes therein. When the voltage at a circuit node exceeds the maximum voltage limit, this condition is known as overvoltage and may be harmful to the circuit. An overvoltage event can be constant (e.g., a direct current (DC) overvoltage) or transient (e.g., a voltage spike). Overvoltage protection devices may be used to protect the circuit against overvoltage events.

Further attention is drawn to US 2020/112167 A1 describing an apparatus including a transistor coupled between an input pin and an output pin and an overvoltage detection circuit configured to receive a serial interface signal from the input pin and generate an enable signal in response to a voltage of the serial interface signal exceeding a voltage threshold. The apparatus also includes a first circuit configured to apply a clamping voltage to a gate of the transistor based on the enable signal to regulate a voltage provided at the output pin.

Other prior art is US 2017/155214 A1 describing a circuit for overvoltage protection between a connector port and a signal node corresponding to an USB connector port.

### SUMMARY

The invention is set forth in the independent claims, respectively. Further aspects are claimed in the dependent claims.

The methods, and circuitries of the disclosure each have several aspects, no single one of which is solely responsible for its desirable attributes. Without limiting the scope of this disclosure as expressed by the claims which follow, some features will now be discussed briefly. After considering this discussion, and particularly after reading the section entitled "Detailed Description," one will understand how the features of this disclosure provide advantages that include circuitry that provides overvoltage protection for a connector port and can be desirably scaled for multiple connector ports.

Certain aspects of the present disclosure generally relate to techniques and apparatus for providing overvoltage protection for circuitry coupled to connector ports, such as USB or USB-C ports.

Certain aspects of the present disclosure provide a circuit for overvoltage protection (OVP) according to claim 1.

Certain aspects of the present disclosure provide a method of providing overvoltage protection according to claim 12.

To the accomplishment of the foregoing and related ends, the one or more aspects comprise the features hereinafter fully described and particularly pointed out in the claims. The following description and the appended drawings set forth in detail certain illustrative features of the one or more aspects. These features are indicative, however, of but a few of the various ways in which the principles of various aspects may be employed.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 illustrates a block diagram of an example device that includes an overvoltage protection (OVP) circuit, in accordance with certain aspects of the present disclosure.
FIG. 2 is an example block diagram illustrating various components being connected to a connector receptacle via optional OVP for some connector pins.
FIG. 3 is a circuit diagram of an example OVP circuit, in accordance with certain aspects of the present disclosure.
FIG. 4 is an example timing diagram illustrating various voltage waveforms for the OVP circuit of FIG. 3 before, during, and after an overvoltage event, in accordance with certain aspects of the present disclosure.
FIG. 5 is a circuit diagram of another example OVP circuit, in accordance with certain aspects of the present disclosure.
FIG. 6 is a flow diagram illustrating example operations for providing OVP for a signal node corresponding to a connector port, in accordance with certain aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Certain aspects of the present disclosure provide an overvoltage protection circuit (OVP) and techniques for overvoltage protection. Certain devices that have an input-output (I/O) connector (such as a Universal Serial Bus (USB) Type-C receptacle) may employ various OVP schemes to prevent electrical over stress (EOS) damage to integrated circuits (ICs) coupled to the I/O connector. Certain OVP schemes may be too complex and/or expensive to provide OVP for multiple pins on the I/O connector. Certain aspects of the present disclosure provide OVP techniques and apparatus that are relatively cheaper (in terms of cost and board area), provide suitable transient and DC overvoltage protection, and offer lower pin/trace count, than other OVP schemes described herein.

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

The word "exemplary" is used herein to mean "serving as an example, instance, or illustration." Any aspect described herein as "exemplary" is not necessarily to be construed as preferred or advantageous over other aspects.

As used herein, the term "connected with" in the various tenses of the verb "connect" may mean that element *A* is directly connected to element *B* or that other elements may be connected between elements *A* and *B* (i.e., that element *A* is indirectly connected with element B). In the case of electrical components, the term "connected with" may also be used herein to mean that a wire, trace, or other electrically conductive material is used to electrically connect elements *A* and *B* (and any components electrically connected therebetween).

### An Example Device

It should be understood that aspects of the present disclosure may be used in a variety of applications. Although the present disclosure is not limited in this respect, the circuits disclosed herein may be used in many apparatuses, such as in a computer, a communication system, a television, audio equipment such as music players and microphones, camera equipment, and test equipment. Communication systems intended to be included within the scope of the present disclosure include, by way of example only, cellular radiotelephone communication systems, satellite communication systems, two-way radio communication systems, one-way pagers, two-way pagers, personal communication systems (PCS), personal digital assistants (PDAs), and the like.

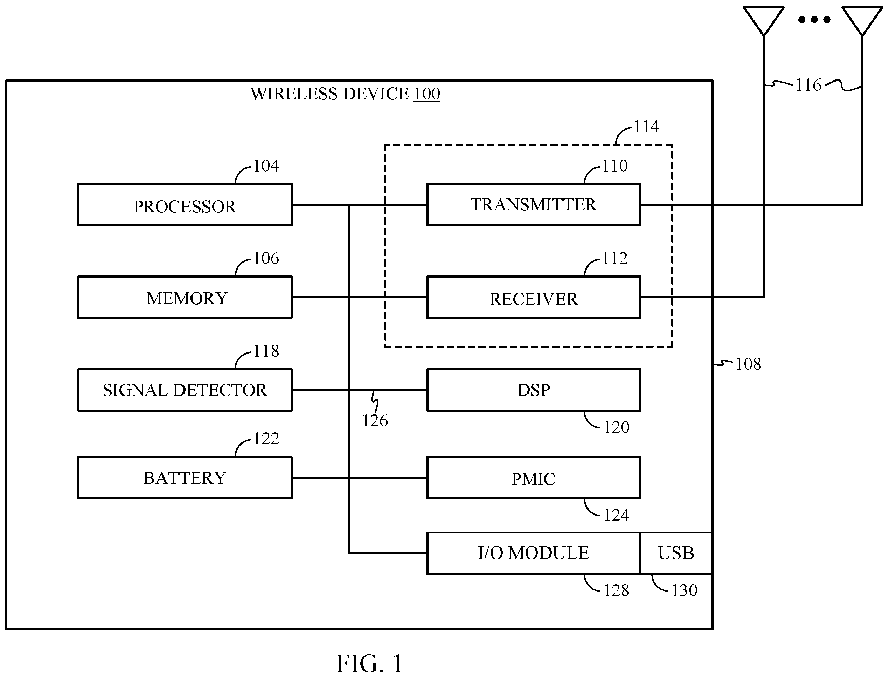

FIG. 1 illustrates an example device 100 in which aspects of the present disclosure may be implemented. The device 100 may be a battery-operated device such as a cellular phone, a PDA, a handheld device, a wireless device, a laptop computer, a tablet, a smartphone, a wearable device, etc.

The device 100 may include a processor 104 that controls operation of the device 100. The processor 104 may also be referred to as a central processing unit (CPU). Memory 106, which may include both read-only memory (ROM) and random access memory (RAM), provides instructions and data to the processor 104. A portion of the memory 106 may also include non-volatile random access memory (NVRAM). The processor 104 typically performs logical and arithmetic operations based on program instructions stored within the memory 106.

In certain aspects, the device 100 may also include a housing 108 that may include a transmitter 110 and a receiver 112 to allow transmission and reception of data between the device 100 and a remote location. For certain aspects, the transmitter 110 and receiver 112 may be combined into a transceiver 114. One or more antennas 116 may be attached or otherwise coupled to the housing 108 and electrically connected to the transceiver 114. The device 100 may also include (not shown) multiple transmitters, multiple receivers, and/or multiple transceivers.

The device 100 may also include a signal detector 118 that may be used in an effort to detect and quantify the level of signals received by the transceiver 114. The signal detector 118 may detect such signal parameters as total energy, energy per subcarrier per symbol, and power spectral density, among others. The device 100 may also include a digital signal processor (DSP) 120 for use in processing signals.

The device 100 may further include a battery 122 used to power the various components of the device 100. The device 100 may also include a power management integrated circuit (power management IC or PMIC) 124 for managing the power from the battery to the various components of the device 100. The PMIC 124 may perform a variety of functions for the device such as direct current (DC)-to-DC conversion, battery charging, power-source selection, voltage scaling, power sequencing, etc. In certain aspects, the PMIC 124 may include a battery charging circuit (e.g., a master-slave battery charging circuit) or other switched-mode power supply. The various components of the device 100 may be coupled together by a bus system 126, which may include a power bus, a control signal bus, and/or a status signal bus in addition to a data bus.

For certain aspects, the device 100 may have an input/output (I/O) module 128 for receiving and/or outputting data and/or power. In certain aspects, the I/O module 128 may include a connector 130, such as a Universal Serial Bus (USB) Type-A (USB-A) receptacle or a USB Type-C (USB-C) receptacle. The pins of the connector 130 may be routed to the processor 104 and/or the PMIC 124 via signal lines of the bus system 126 and/or the I/O module 128, at least some of which may include an overvoltage protection circuit, as further described herein.

### Example Overvoltage Protection Circuit

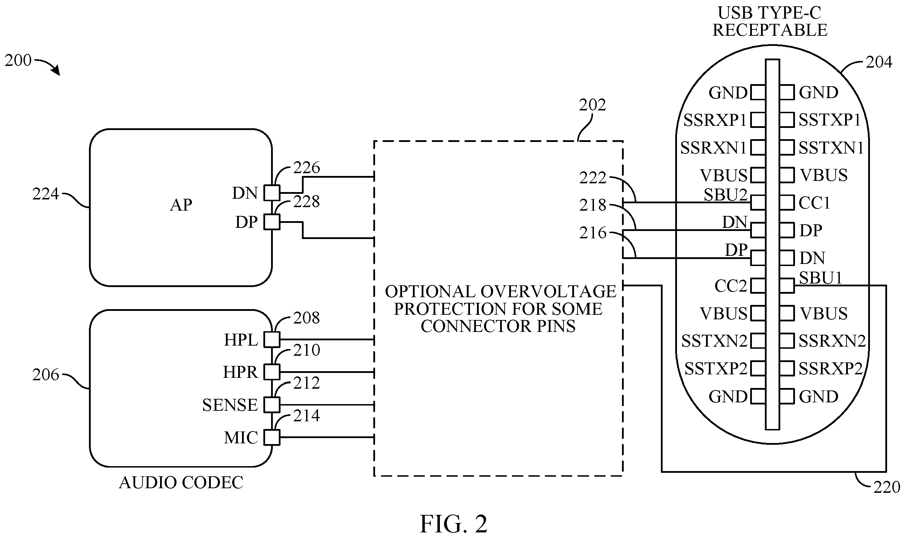

DC overvoltage and surge voltage fault conditions may occur at one or more pins of a connector, such as a USB-A or USB-C receptacle, of a device (e.g., device 100). An overvoltage protection (OVP) scheme may be employed, as illustrated in the block diagram 200 of FIG. 2, to prevent electrical over stress (EOS) damage to chipset integrated circuits (ICs) having various signal nodes for coupling to the connector pins. For example, an OVP scheme 202 may be implemented between certain pins of a USB-C port 204 and a pin of an audio encoder/decoder (codec) 206 used for an analog headphone audio output (e.g., the headphone left (HPL) pin 208 or headphone right (HPR) pin 210) or input (e.g., the sense pin 212 or the microphone (MIC) pin 214). As additional examples, in addition to bus power (V_{BUS}) pins, customers may desire a differential pair positive (DP) pin 216 (e.g., Dp1 or Dp2), a differential pair negative (DN) pin 218 (e.g., Dn1 or Dn2), and/or a sideband use (SBU) pin (e.g., SBU1 220 or SBU2 222) to tolerate high voltages (e.g., ±20 V), due to various fault conditions (such as a short circuit to V_{BUS,}, which can reach 20 V in some cases). In certain cases, the OVP scheme 202 may be implemented between the DP and DN pins 216, 218 of the USB-C port 204 and pins (e.g., the counterpart DP and DN pins 226, 228) of an application processor 224 used for running applications in an operating system. Due to higher numbers of pins to protect and signal integrity concerns, it may be desirable to minimize, or at least reduce, the number of control pins and traces involved to implement an OVP scheme.

One example OVP scheme uses a separate, external IC to implement USB data/audio switches between the connector (e.g., the USB-C receptacle) and the chipset ICs. This external IC also provides built-in OVP on certain signal lines. However, such an external IC is an expensive solution, in terms of both cost and board area.

Another example OVP scheme works for surge protection (e.g., transient surges) where finite charge can be discharged to prevent high voltage at an IC pin. However, the circuit implementing this surge-protection scheme does not protect the IC from high DC voltage due to extremely large power dissipation when the circuit tries to clamp DC voltage with low resistance.

Yet another OVP scheme offers external field-effect transistor (FET)-based protection, where an external FET is used as a switch between the connector port and the signal line. In this scheme, a control circuit senses the voltage at the connector port and controls the FET switch based on the sensed voltage. This is a much cheaper solution compared to an external protection IC. However, this scheme entails using two pins (e.g., OVP drive and OVP sense) and corresponding traces ("wires") per connector pin designated for overvoltage protection. As described above, it may be desirable to minimize, or at least reduce, the number of control pins and traces involved to implement an OVP scheme, due to the relatively high number of pins to protect for USB-C and signal integrity concerns.

Certain aspects of the present disclosure provide OVP techniques and apparatus that are relatively cheaper (in terms of cost and board area), provide suitable transient and DC overvoltage protection, and offer lower pin/trace count, than the example OVP schemes described above. The OVP techniques and apparatus described herein may enable OVP for multiple pins of a connector at a desirable cost and area.

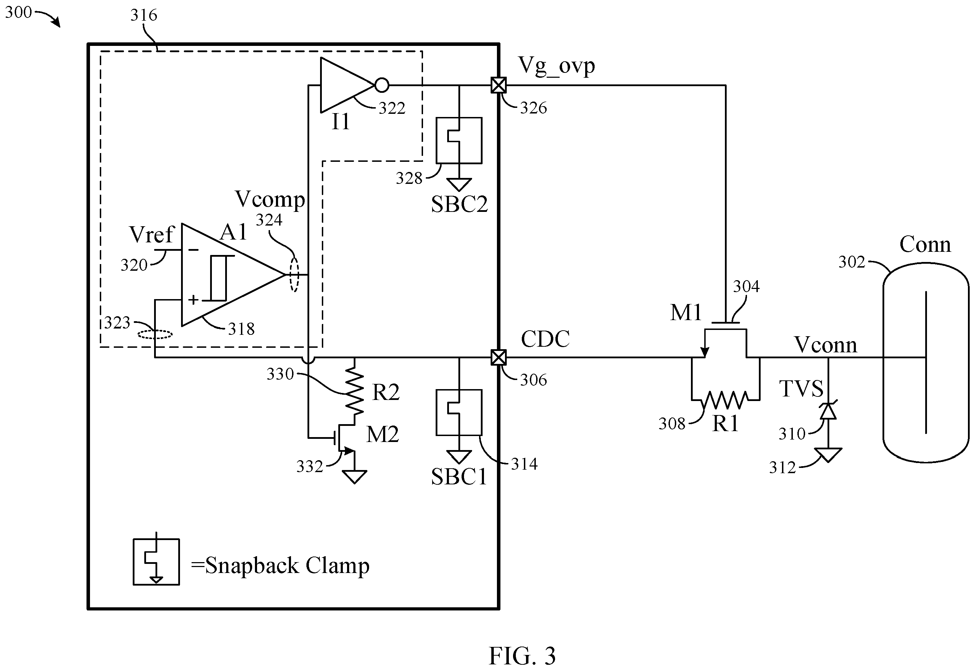

FIG. 3 is a circuit diagram of an example OVP circuit 300, in accordance with certain aspects of the present disclosure. While FIG. 3 illustrates the OVP circuit for a single connector port 302 (such as the DP pin 216), it is to be understood that the OVP circuit may be replicated for other ports (such as the DN pin 218, SBU1 220, and/or SBU2 222) of the connector. The connector port 302 may be a USB-C port, such as the DP pin 216, the DN pin 218, SBU1 220, and/or SBU2 222.

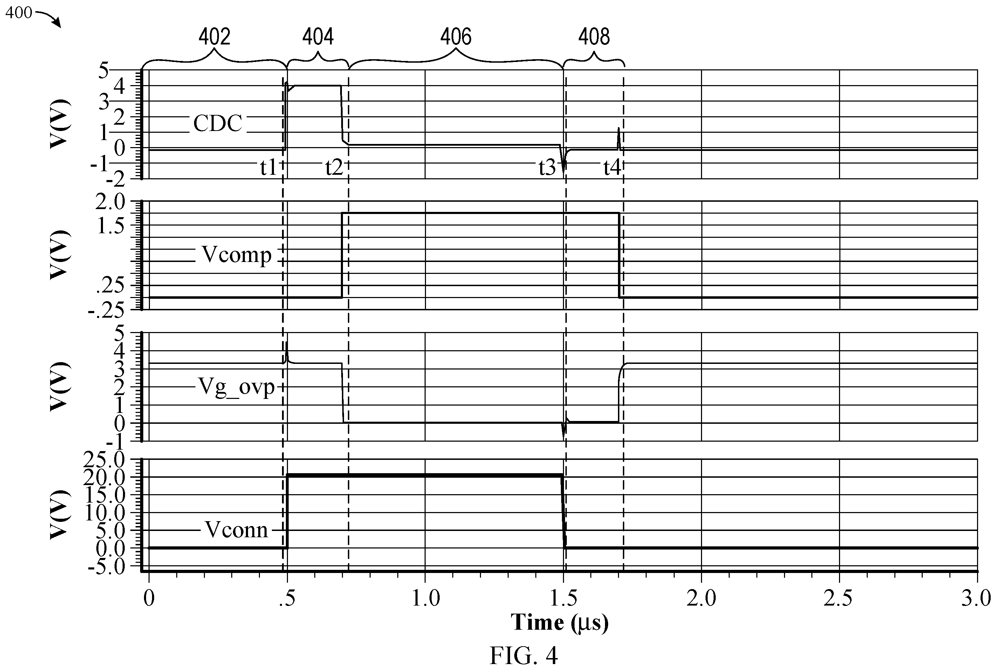

The OVP circuit 300 may include a switch 304 connected between the connector port 302 (e.g., a DP, DN, or SBU port, having a voltage labeled "Vconn") and the signal node 306 (labeled "CDC," which refers to the connector DC voltage) corresponding to-or intended for carrying a signal to or from-the connector port. In aspects, the switch 304 may have a first terminal (e.g., a drain) for coupling to the connector port 302 and a second terminal (e.g., a source) for coupling to the signal node 306. The OVP circuit 300 may lack a sense line coupled to a node between the first terminal of the switch 304 and the connector port 302. Without the sense line, the OVP circuit 300 may provide a desirable trace count and area, which in turn may provide a desirable fabrication cost. The switch 304 may be implemented by a transistor, such as an n-type metal-oxide-semiconductor field-effect transistor (n-MOSFET or NMOS transistor) M1. The switch 304 may be closed during normal operation (such as when the voltage of the signal node is within normal operating voltages) and open during an overvoltage event as further described herein with respect to FIG. 4. In aspects, the NMOS transistor M1 may have a suitable breakdown voltage for providing overvoltage protection, such as a breakdown voltage of at least 20 V. A resistor 308 (having resistance "R1") may be connected in parallel with the switch 304. Resistor 308 may have a suitable resistance to provide a voltage drop between the connector port 302 and the signal node 306 during an overvoltage event, as further described herein with respect to FIG. 4. As an example, resistor 308 may have a resistance of 20 kΩ.

The OVP circuit 300 may also include a transient voltage suppressor (TVS) 310, which may be implemented by a transient-voltage suppression diode (e.g., a unidirectional TVS diode with a clamping voltage of 28 V). The TVS 310 may be coupled in shunt between a node coupled to the connector port 302 (and to the switch 304) and a reference potential node 312 (e.g., electrical ground). The TVS 310 may shunt transient overvoltages to ground when Vconn exceeds the breakdown voltage of the TVS 310.

The OVP circuit 300 may also include a first transient protection circuit 314 coupled between the signal node 306 and the reference potential node 312 (e.g., electrical ground) for the circuit. The first transient protection circuit 314 may be implemented, for example, by a snapback clamp SBC1, as illustrated in FIG. 3, or by other voltage-clamping structures (such as those used for electrostatic discharge (ESD) protection). For example, the first transient protection circuit 314 may be implemented by one or more diodes coupled in series with a resistive element or by one or more diodes in series with a resistive-capacitive (RC) clamp. The first transient protection circuit 314 may provide additional protection against transient overvoltages. The first transient protection circuit 314 may pull overvoltages down (or up depending on the polarity of the overvoltage) to certain holding voltages when the voltage at the signal node 306 exceeds the breakdown voltage of the snapback clamp (e.g., a parasitic bipolar junction transistor (BJT) of an n-MOSFET).

The OVP circuit 300 may further include a control circuit 316. The control circuit 316 may have an input 323 coupled to the signal node 306 and an output 324 coupled to a control input (e.g., a gate) of the switch 304. The control circuit 316 may include a comparator 318 (labeled "A1") for comparing the signal node 306 to a reference voltage (labeled "Vref") at a reference voltage node 320. Vref may be programmable or configurable. For example, Vref may equal 3.3 V before an OVP trigger and may be changed to 30 mV after the trigger. In certain aspects, Vref may be lower than a holding voltage of the first transient protection circuit. For certain aspects, the control circuit 316 may also include an inverter 322 (labeled "I1") coupled between the output 324 of the comparator (having an output voltage labeled "Vcomp") and a control input of the switch 304 (e.g., the gate of the transistor M1, having a voltage labeled "Vg_ovp"). In aspects, the output of the inverter 322 may be considered the first output of the control circuit 316. As there may be a delay in detecting overvoltages by the comparator 318, the first transient protection circuit 314 may pull overvoltages down to a holding voltage until the comparator 318 detects the overvoltage on the signal node 306 and opens the switch 304 (e.g., turns off the transistor M1) as further described herein with respect to FIG. 4.

For certain aspects, the control circuit 316 may have a single output, such as the output of the comparator 318. In this case, the transistor M1 may be implemented as a depletion-mode FET, having a gate coupled to the output of the comparator 318, and the inverter 322 need not be used (i.e., can be replaced by a short circuit).

For certain aspects, the OVP circuit 300 may further include a second transient protection circuit 328 coupled between the control input of the switch 304 and the reference potential node 312. As described above, the second transient protection circuit 328 may be implemented, for example, by a snapback clamp SBC2, as illustrated in FIG. 3, or by one or more diodes coupled in series with a resistive element. The second transient protection circuit 328 may limit voltage at the control input of the switch 304 such that any overvoltage does not leak to the signal node 306.

For certain aspects, the OVP circuit 300 may also include a resistor 330 (having resistance "R2") coupled in series with another switch 332 between the signal node 306 and the reference potential node 312. The other switch 332 may be implemented by an NMOS transistor M2, as illustrated. The control input of the other switch 332 (e.g., the gate of transistor M2) may be coupled to the output 324 of the comparator 318. In certain aspects, the output 324 of the comparator 318 may be considered the second output of the control circuit 316, such that the second output of the control circuit 316 is coupled to the control input of the other switch 332. In certain aspects, the second output of the control circuit 316 may be the same as the first output of the control circuit 316. In other aspects, the second output of the control circuit 316 may be coupled to the first output of the control circuit 316, for example, via the inverter 322. In certain aspects, the resistor 330 may have a resistance R2 of around 300 Ω and/or may be adjustable. In certain cases, the resistor 308 may have a first resistance R1 that is greater than a second resistance R2 of the resistor 330 by at least an order of magnitude.

For certain aspects, the switch 304, resistor 308, and the TVS 310 may all be external to an integrated circuit (IC), whereas the other components of the OVP circuit 300 may be internal to the IC. For example, the signal node 306 may include a pin of the IC. The OVP circuit 300 may include only a single additional pin 326 of the IC for the overvoltage protection of the connector port 302, where the single additional pin 326 is coupled between the output of the control circuit 316 and the control input of the switch 304. That is, the IC may have two pins for the overvoltage protection of the connector port 302: a pin for the signal node 306 and another pin 326 for the control input of the switch 304. These two pins may provide a desirable trace count and area of the IC, which in turn may provide a desirable fabrication cost of the IC. In certain aspects, the IC may be a system-on-a-chip (SoC), for example, including the application processor 224, the audio codec 206, and the internal components of the OVP circuit 300 (such as the first transient protection circuit 314, the control circuit 316, the second transient protection circuit 328, the resistor 330, and/or the other switch 332).

In operation, the FET M1 is used to protect against high voltage (e.g., 20 V). FIG. 4 is an example timing diagram 400 illustrating CDC, Vcomp, Vg_ovp, and Vconn voltage waveforms for the OVP circuit 300 of FIG. 3 before, during, and after an overvoltage event, in accordance with certain aspects of the present disclosure. As shown, the various voltage waveforms (CDC, Vcomp, Vg_ovp, and Vconn) are depicted as voltages over time. During Phase 1 (402) starting shortly after t1 when Vconn experiences the overvoltage event (e.g., a sudden increase in voltage to 20 V), snapback clamps SBC1 and SBC2 kick in and limit transient voltages on the IC pins CDC and Vg_ovp to their respective holding voltages (e.g., < ~4.7 V). During Phase 2 (404) between t1 and t2, high-resistance resistor 308 along with snapback clamp SBC1 limits the CDC pin voltage to the SBC holding voltage. After a control circuit delay (e.g., ~200 ns due to the comparator 318 and the inverter 322), Phase 3 (406) begins at t2. During Phase 3 (406) from t2 to t3, Vg_ovp is pulled to ground (0 V) by Vcomp transitioning to a logic high signal and the inverter 322 inverting this to a logic low signal, such that NMOS transistor M1 is turned off and the CDC pin is disconnected from the connector port 302 to protect the CDC pin from Vconn's overvoltage condition. Also due to Vcomp transitioning to a logic high signal, NMOS transistor M2 turns on and pulls the CDC pin voltage to ground. The control circuit 316 maintains this state as long as Vconn*R2/(R1+R2) > Vref. After the overvoltage event stops at t3, Phase 4 (408) begins. After a control circuit delay during Phase 4, the control circuit turns off transistor M2 and turns on transistor M1, ending Phase 4 at t4.

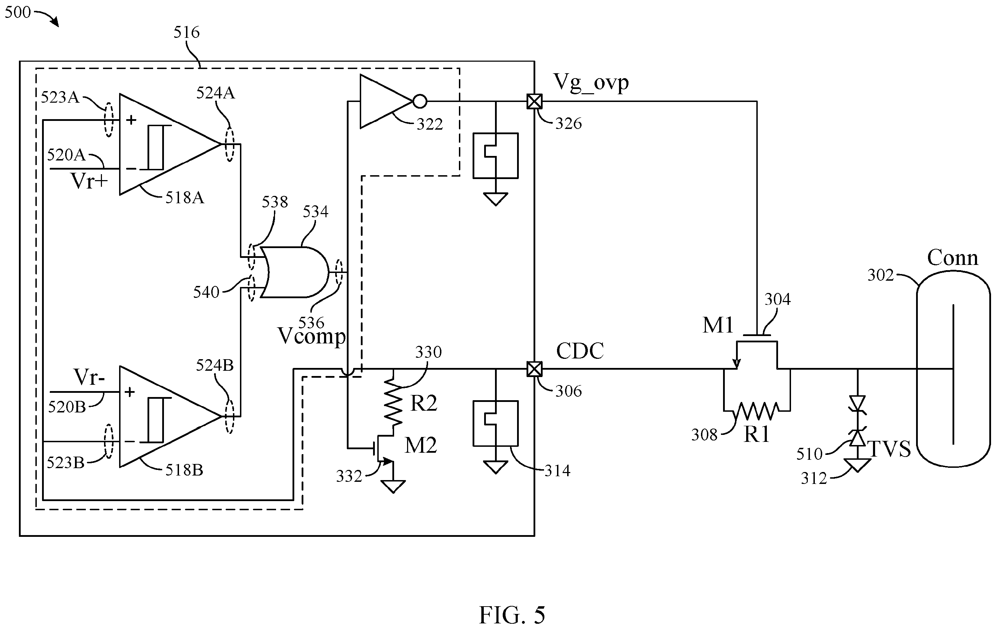

In certain aspects, the OVP circuit may provide overvoltage protection for positive and/or negative voltages. For example, FIG. 5 is a circuit diagram of another example OVP circuit 500, in accordance with certain aspects of the present disclosure. The OVP circuit 500 may be used for connector pins that support both positive and negative signal voltages and transient surge conditions. The OVP circuit 500 may include a bidirectional voltage-clamping circuit 510 (e.g., two unidirectional TVS diodes in anti-series, as illustrated). The bidirectional voltage-clamping circuit 510 may shunt transient positive or negative overvoltages to ground when the magnitude of Vconn exceeds the breakdown voltage of either of the TVS diodes.

The OVP circuit 500 may also include a control circuit 516 having a first comparator 518A, a second comparator 518B, and a logical OR gate 534, which may effectively replace the comparator 318 in FIG. 3. The logical OR gate 534 may have an output 536 coupled to an output of the control circuit 516. The first comparator 518A may have a first input 523A coupled to the signal node 306, a second input 520A (also referred to as a "first reference voltage node") configured to receive a first reference voltage (e.g., Vr+, which may be a positive voltage), and an output 524A coupled to a first input 538 of the logical OR gate. The second comparator 518B may have a first input 523B coupled to the signal node 306, a second input 520B (also referred to as a "second reference voltage node") configured to receive a second reference voltage (e.g., Vr-, which may be a negative voltage), and an output 524B coupled to a second input 540 of the logical OR gate 534. The first comparator 518A may detect a positive overvoltage relative to the first reference voltage (e.g., > Vr+) and turn off the switch 304, whereas the second comparator 518B may detect a negative overvoltage relative to the second reference voltage (e.g., < Vr-) and turn off the switch 304. In this manner, the control circuit may detect whether a magnitude of the voltage at the signal node 306 is greater than or equal to a magnitude of the first reference voltage or a magnitude of the second reference voltage.

While the examples depicted in FIGs. 3 and 5 are described herein with respect to providing OVP for positive voltages or for positive and negative voltages to facilitate understanding, aspects of the present disclosure may also be applied to an OVP circuit that protects only against negative overvoltages.

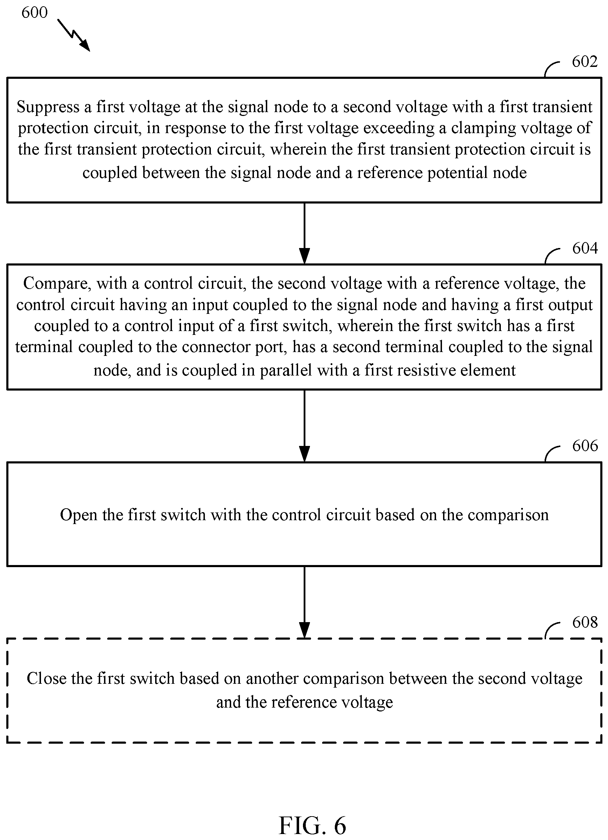

FIG. 6 is a flow diagram illustrating example operations 600 for providing OVP for a signal node (e.g., the signal node 306) corresponding to a connector port (e.g., the connector port 302), in accordance with certain aspects of the present disclosure. The operations 600 may be performed, for example, by an OVP circuit (such as the OVP circuit 300 or the OVP circuit 500).

The operations 600 may begin at block 602, where a first transient protection circuit (e.g., the first transient protection circuit 314) may suppress a first voltage at a signal node (e.g., the signal node 306) to a second voltage, in response to the first voltage exceeding a clamping voltage of the first transient protection circuit. The first transient protection circuit may be coupled between the signal node and a reference potential node (e.g., the reference potential node 312). At block 604, a control circuit (e.g., the control circuit 316) may compare the second voltage with a reference voltage (e.g., Vref). The control circuit may have an input (e.g., the input 323) coupled to the signal node and a first output (e.g., the output 324) coupled to a control input of a first switch (e.g., the switch 304). The first switch may have a first terminal coupled to the connector port and a second terminal coupled to the signal node, and the first switch may be coupled in parallel with a first resistive element (e.g., resistor 308). At block 606, the control circuit may open the first switch based on the comparison. For example, the comparison may involve detecting that a magnitude of the second voltage is greater than or equal to a magnitude of the reference voltage.

At optional block 608, the control circuit may close the first switch based on another comparison between the second voltage and the reference voltage. In this case, the second voltage for the other comparison may be sensed through the first resistive element coupled in parallel with the first switch. In other words, the first resistive element may be used to monitor the connector port until the overvoltage condition is gone, such that the first switch may then be closed.

With respect to block 602, the first transient protection circuit may initiate the suppression of the first voltage in response to the first voltage exceeding (a magnitude of) the clamping voltage of the first transient protection circuit. The first voltage may be suppressed at block 602 for positive or negative voltages. In aspects, the clamping voltage may be a breakdown voltage of a snapback clamp. The first transient protection circuit may pull overvoltages down (or up) to certain holding voltages associated with the first transient protection circuit.

In certain aspects, a second transient protection circuit (e.g., the second transient protection circuit 328) may be used to suppress transient voltages from electrically stressing the first switch. For example, the operations 600 may further include the second transient protection circuit suppressing a third voltage at the control input of the first switch to a fourth voltage, in response to the third voltage exceeding a clamping voltage of the second transient protection circuit. The second transient protection circuit may be coupled between the control input of the first switch and the reference potential node.

In certain aspects, a second switch (e.g., the other switch 332) may be used to further suppress the voltage at the signal node. For example, the operations 600 may further include the control circuit closing the second switch based on the comparison (e.g., detecting that a magnitude of the second voltage is greater than or equal to a magnitude of the reference voltage). The second switch may be coupled in series with a second resistive element (e.g., the resistor 330) between the signal node and the reference potential node. The output of the control circuit may be coupled to a control input of the second switch.

In certain aspects, the comparison may be performed with a comparator (e.g., the comparator 318). For example, the comparison at block 604 may include the comparator comparing the second voltage with the reference voltage. In this case, the comparator may have a first input coupled to the signal node, have a second input receiving the reference voltage, and have an output coupled to the first output of the control circuit.

In certain aspects, control voltage output by the comparator may be inverted with an inverter (such as the inverter 322). For example, opening the first switch at block 606 may include applying an inverted output of the comparator to the control input of the first switch.

In aspects, the reference voltage of the comparator may be different than a holding voltage of the first transient protection circuit. For example, a magnitude of the holding voltage may be greater than the reference voltage in order to enable the control circuit to trigger the opening of the first switch.

In certain aspects, a TVS (e.g., the TVS 310, which may be implemented by a TVS diode) may be used to further suppress transient voltages. For example, suppressing the first voltage at block 602 may also include suppressing the first voltage to the second voltage further with a TVS diode coupled between the first terminal of the first switch and the reference potential node.

In certain aspects, the first resistive element may be used to monitor the voltage at the connector pin until the overvoltage condition has ended. The control circuit may close the first switch based on another comparison between the second voltage and the reference voltage. For example, the second voltage for the other comparison may be sensed through the first resistive element coupled in parallel with the first switch and/or through the second resistive element coupled in series with the second switch. With respect to the operations 600, comparing the second voltage at block 604 may include comparing the second voltage with the reference voltage based at least in part on a first voltage drop across the first resistive element coupled in parallel with the first switch, and in certain cases, a second voltage drop across the second resistive element coupled in series with the second switch. The control circuit may compare whether the Vconn*R2/(R1+R2) is greater than the reference voltage (Vref). When Vconn*R2/(R1+R2) is greater than the reference voltage, the control circuit may open the first switch, and when Vconn*R2/(R1+R2) is less than or equal to the reference voltage, the control circuit may close the first switch.

In aspects, the control circuit may close the first switch when the overvoltage event stops. As an example, the control circuit may close the first switch based on the comparison, such as detecting that a magnitude of the second voltage is less than a magnitude of the reference voltage.

With respect to block 608, the control circuit may close the first switch if the second voltage is below a certain threshold based on the reference voltage, for example, as described herein with respect to FIG. 4 following Phase 4. As an example, if Vconn*R2/(R1+R2) is less than or equal to Vref, the control circuit may close the first switch, and in certain cases, the control circuit may open the second switch.

The various operations of methods described above may be performed by any suitable means capable of performing the corresponding functions. The means may include various hardware and/or software component(s) and/or module(s), including, but not limited to a circuit, an application-specific integrated circuit (ASIC), or processor. Generally, where there are operations illustrated in figures, those operations may have corresponding counterpart means-plus-function components with similar numbering.

As used herein, the term "determining" encompasses a wide variety of actions. For example, "determining" may include calculating, computing, processing, deriving, investigating, looking up (e.g., looking up in a table, a database, or another data structure), ascertaining, and the like. Also, "determining" may include receiving (e.g., receiving information), accessing (e.g., accessing data in a memory), and the like. Also, "determining" may include resolving, selecting, choosing, establishing, and the like.

As used herein, a phrase referring to "at least one of" a list of items refers to any combination of those items, including single members. As an example, "at least one of: *a, b,* or c" is intended to cover: *a, b, c, a-b, a-c, b-c,* and *a-b-c,* as well as any combination with multiples of the same element (e.g., *a-a, a-a-a, a-a-b, a-a-c, a-b-b, a-c-c, b-b, b-b-b, b-b-c, c-c,* and *c-c-c* or any other ordering of *a, b,* and *c*)*.*

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

It is to be understood that the claims are not limited to the precise configuration and components illustrated above. Various modifications, changes and variations may be made in the arrangement, operation and details of the methods and apparatus described above without departing from the scope of the claims.

## Claims

1. A circuit (300) for overvoltage protection, OVP, of a signal node (306) corresponding to a connector port (302), the OVP circuit (300) comprising:
a first switch (304) having a first terminal for coupling to the connector port (302) and having a second terminal for coupling to the signal node (306), wherein the first switch (304) is, in use, coupled between the connector port (302) and the signal node (306);
a first resistive element (308) coupled in parallel with the first switch (304);
a first transient protection circuit (314) coupled between the signal node (306) and a reference potential node (312); and
a control circuit (316, 516) having an input coupled (323, 523) to the signal node (306) and having a first output (324, 536) coupled to a control input of the first switch (304);
wherein:
the control circuit (316, 516) is part of an integrated circuit, IC;
the first switch (304) is external to the IC;
the signal node (306) is coupled to a pin of the IC;
the OVP circuit (300) comprises only a single additional pin (326) of the IC for the overvoltage protection of the connector port (302); and
the single additional pin (326) is coupled between the first output (324, 536) of the control circuit (316, 516) and the control input of the first switch (304).

2. The OVP circuit of claim 1, further comprising a second transient protection circuit (328) coupled between the control input of the first switch and the reference potential node; and
wherein at least one of the first transient protection circuit or the second transient protection circuit comprises a snapback clamp; or
wherein at least one of the first transient protection circuit or the second transient protection circuit comprises at least one diode coupled in series with a resistive-capacitive, RC, clamp.

3. The OVP circuit of claim 1, further comprising a second resistive element and a second switch coupled in series between the signal node and the reference potential node, wherein a second output of the control circuit is coupled to a control input of the second switch; and wherein the first resistive element has a first resistance that is greater than a second resistance of the second resistive element by at least an order of magnitude.

4. The OVP circuit of claim 1, wherein the control circuit comprises a comparator (318) having a first input coupled to the signal node, having a second input coupled to a reference voltage node, and having an output coupled to the first output of the control circuit.

5. The OVP circuit of claim 4, wherein the control circuit further comprises an inverter having an input coupled to the output of the comparator and having an output coupled to the first output of the control circuit; and further comprising a second resistive element and a second switch coupled in series between the signal node and the reference potential node, wherein the output of the comparator is coupled to a control input of the second switch.

6. The OVP circuit of claim 4, wherein a magnitude of a reference voltage at the reference voltage node is lower than a magnitude of a holding voltage of the first transient protection circuit.

7. The OVP circuit of claim 1, wherein the connector port is a USB-C port; and
wherein the USB-C port is a differential pair positive, DP, port, a differential pair negative (DN) port, or a sideband use SBU, port.

8. The OVP circuit of claim 1, wherein the OVP circuit lacks a sense line coupled to a node between the first terminal of the first switch and the connector port; or
wherein the first switch comprises an n-type metal-oxide-semiconductor, NMOS, transistor having a drain as the first terminal of the first switch, having a source as the second terminal of the first switch, and having a gate as the control input of the first switch; and
wherein a breakdown voltage of the NMOS transistor is at least 20 V.

9. The OVP circuit of claim 1, wherein the first resistive element is external to the IC; or
wherein the first transient protection circuit is internal to the IC.

10. The OVP circuit of claim 1, further comprising a transient voltage suppression, TVS, diode coupled between the first terminal of the first switch and the reference potential node.

11. The OVP circuit of claim 1, wherein the control circuit comprises:
a logical OR gate having an output coupled to the first output of the control circuit;
a first comparator having a first input coupled to the signal node, having a second input coupled to a first reference voltage node, and having an output coupled to a first input of the logical OR gate; and
a second comparator having a first input coupled to the signal node, having a second input coupled to a second reference voltage node, and having an output coupled to a second input of the logical OR gate.

12. A method (600) of providing overvoltage protection between a connector port (302) and a signal node (306) corresponding to the connector port (302), the method (600) comprising:
suppressing (602) a first voltage at the signal node (306) to a second voltage with a first transient protection circuit (314), in response to the first voltage exceeding a clamping voltage of the first transient protection circuit (314), wherein the first transient protection circuit is coupled between the signal node (306) and a reference potential node (312);
comparing (604), with a control circuit (316, 516), the second voltage with a reference voltage, the control circuit having an input coupled (323, 523) to the signal node (306) and having a first output (324, 536) coupled to a control input of a first switch (304), wherein the first switch (304) has a first terminal coupled to the connector port (302), has a second terminal coupled to the signal node (306), and is coupled in parallel with a first resistive element (308); and
opening (606) the first switch with the control circuit (316, 516) based on the comparison;
wherein:
the control circuit (316, 516) is part of an integrated circuit, IC;
the first switch (304) is external to the IC;
the signal node (306) includes a pin of the IC;
the method for providing overvoltage protection uses only a single additional pin (326) of the IC for the overvoltage protection of the connector port (302); and
the single additional pin (326) is coupled between the first output (324, 536) of the control circuit (316, 516) and the control input of the first switch (304).

13. The method of claim 12, further comprising suppressing a third voltage at the control input of the first switch to a fourth voltage with a second transient protection circuit coupled between the control input of the first switch and the reference potential node, in response to the third voltage exceeding a clamping voltage of the second transient protection circuit.

14. The method of claim 12, further comprising closing (608), with the control circuit, a second switch based on the comparison, wherein the second switch is coupled in series with a second resistive element between the signal node and the reference potential node and wherein a second output of the control circuit is coupled to a control input of the second switch; and
wherein closing the second switch comprises closing the second switch based on the comparison detecting that a magnitude of the second voltage is greater than or equal to a magnitude of the reference voltage.

15. The method of claim 12, wherein the comparing comprises comparing, with a comparator, the second voltage with the reference voltage, the comparator having a first input coupled to the signal node, having a second input receiving the reference voltage, and having an output coupled to the first output of the control circuit; and wherein opening the first switch comprises applying an inverted output of the comparator to the control input of the first switch; or
wherein the reference voltage is different than a holding voltage of the first transient protection circuit; or
wherein suppressing the first voltage comprises suppressing the first voltage to the second voltage further with a transient voltage suppression, TVS, diode coupled between the first terminal of the first switch and the reference potential node; or
further comprising closing, with the control circuit, the first switch based on another comparison between the second voltage and the reference voltage, wherein the second voltage for the other comparison is sensed through the first resistive element coupled in parallel with the first switch; or
wherein opening the first switch comprises opening the first switch based on the comparison detecting that a magnitude of the second voltage is greater than or equal to a magnitude of the reference voltage.

## Patentansprüche

1. Eine Schaltung (300) für Überspannungsschutz bzw. OVP (OVP = overvoltage protection) eines Signalknotens (306), der einem Verbinder-Port (302) entspricht, wobei die OVP-Schaltung (300) Folgendes aufweist:
ein erstes Schaltelement (304) mit einem ersten Anschluss zum Koppeln des Verbinder-Ports (302) und mit einem zweiten Anschluss zum Koppeln des Signalknotens (306), wobei das erste Schaltelement (304) während einer Nutzung zwischen den Verbinder-Port (302) und den Signalknoten (306) gekoppelt ist; ein erstes resistives Element bzw. Widerstandselement (308) das parallel zu dem ersten Schaltelement (304) gekoppelt ist;
eine erste Transientenschutzschaltung (314), die zwischen den Signalknoten (306) und einen Referenzpotentialknoten (312) gekoppelt ist; und
eine Steuerschaltung (316, 516), mit einem Eingang (323, 523), der an den Signalknoten (306) gekoppelt ist und mit einem ersten Ausgang (324, 536), der an einen Steuereingang des ersten Schaltelementes (304) gekoppelt ist;
wobei:
die Steuerschaltung (316, 516) Teil eines integrierten Schaltkreises bzw. IC (IC = integrated circuit) ist;
das erste Schaltelement (304) extern zu dem IC ist;
der Signalknoten (306) an einen Pin des IC gekoppelt ist;
die OVP-Schaltung (300) nur einen einzigen zusätzlichen Pin (326) des IC für den Überspannungsschutz des Verbinder-Ports (302) aufweist; und
der einzelne zusätzliche Pin (326) zwischen den ersten Ausgang (324, 536) der Steuerschaltung (316, 516) und den Steuereingang des ersten Schaltelementes (304) gekoppelt ist.

2. OVP-Schaltung nach Anspruch 1, die weiter eine zweite Transientenschutzschaltung (328) aufweist, die zwischen den Steuereingang des ersten Schaltelementes und den Referenzpotentialknoten gekoppelt ist; und
wobei die erste Transientenschutzschaltung und/oder die zweite Transientenschutzschaltung eine Snapback-Klemmschaltung aufweist; oder
wobei die erste Transientenschutzschaltung und/oder die zweite Transientenschutzschaltung wenigstens eine Diode aufweist, die mit einer resistiv-kapazitiven Klemmschaltung bzw. RC-Klemmschaltung (RC = resistive-capacitive) in Reihe gekoppelt ist.

3. OVP-Schaltung nach Anspruch 1, die weiter ein zweites resistives Element und ein zweites Schaltelement aufweist, und zwar gekoppelt in Reihe zwischen den Signalknoten und den Referenzpotenzialknoten, wobei ein zweiter Ausgang der Steuerschaltung an einen Steuereingang des zweiten Schaltelementes gekoppelt ist; und
wobei das erste resistive Element einen ersten Widerstand hat, der größer als ein zweiter Widerstand des zweiten resistiven Elements ist, und zwar um wenigstens eine Größenordnung.

4. OVP-Schaltung nach Anspruch 1, wobei die Steuerschaltung ein Vergleichselement bzw. einen Komparator (318) aufweist, und zwar mit einem ersten Eingang, der an den Signalknoten gekoppelt ist, mit einem zweiten Eingang, der an einen Referenzspannungsknoten gekoppelt ist, und mit einem Ausgang, der an den ersten Ausgang der Steuerschaltung gekoppelt ist.

5. OVP-Schaltung nach Anspruch 4, wobei die Steuerschaltung weiter einen Inverter aufweist, und zwar mit einem Eingang, der an den Ausgang des Komparators gekoppelt ist, und mit einem Ausgang, der an den ersten Ausgang der Steuerschaltung gekoppelt ist; und weiter ein zweites resistives Element und ein zweites Schaltelement aufweist, und zwar gekoppelt in Reihe zwischen den Signalknoten und den Referenzpotenzialknoten, wobei der Ausgang des Komparators an einen Steuereingang des zweiten Schaltelementes gekoppelt ist.

6. OVP-Schaltung nach Anspruch 4, wobei eine Größe einer Referenzspannung an dem Referenzspannungsknoten geringer ist als eine Größe einer Haltespannung der ersten Transientenschutzschaltung.

7. OVP-Schaltung nach Anspruch 1, wobei der Verbinder-Port ein USB-C-Port ist; und
wobei der USB-C-Port ein positiver Port eines Differenzpaars bzw. DP-Port (DP = differential pair positive) ist, ein negativer Port eines Differenzpaars bzw. DN-Port (DN = differential pair negative) oder ein Port zur Seitenbandnutzung bzw. SBU-Port (SBU = sideband use) ist.

8. OVP-Schaltung nach Anspruch 1, wobei die OVP-Schaltung keine Abfühl- bzw. Sense-Leitung aufweist, die an einen Knoten zwischen dem ersten Anschluss des ersten Schaltelementes und den Verbinder-Port gekoppelt ist; oder
wobei das erste Schaltelement einen n-Typ-Metall-Oxid-Halbleiter-Transistor bzw. NMOS-Transistor (NMOS = n-type metal-oxide-semiconductor) aufweist, der einen Drain als den ersten Anschluss des ersten Schaltelementes, eine Source als den zweiten Anschluss des ersten Schaltelementes und ein Gate als den Steuereingang des ersten Schaltelementes hat; und
wobei eine Durchbruchspannung des NMOS-Transistors mindestens 20 V beträgt.

9. OVP-Schaltung nach Anspruch 1, wobei das erste resistive Element extern zu dem IC ist; oder
wobei die erste Transientenschutzschaltung intern zu dem IC ist.

10. OVP-Schaltung nach Anspruch 1, die weiter eine Transientenspannungsbegrenzungs- bzw. TVS-Diode (TVS = transient voltage suppression) aufweist, die zwischen den ersten Anschluss des ersten Schaltelementes und den Referenzpotenzialknoten gekoppelt ist.

11. OVP-Schaltung nach Anspruch 1, wobei die Steuerschaltung Folgendes aufweist:
ein logisches ODER-Gatter mit einem Ausgang, der an den ersten Ausgang der Steuerschaltung gekoppelt ist;
einen ersten Komparator mit einem ersten Eingang, der an den Signalknoten gekoppelt ist, mit einem zweiten Eingang, der an einen ersten Referenzspannungsknoten gekoppelt ist, und mit einem Ausgang, der an einen ersten Eingang des logischen ODER-Gatters gekoppelt ist; und
einen zweiten Komparator mit einem ersten Eingang, der an den Signalknoten gekoppelt ist, mit einem zweiten Eingang, der ab einen zweiten Referenzspannungsknoten gekoppelt ist, und mit einem Ausgang, der an einen zweiten Eingang des logischen ODER-Gatters gekoppelt ist.

12. Ein Verfahren (600) zum Vorsehen von Überspannungsschutz zwischen einem Verbinder-Port (302) und einem Signalknoten (306), der dem Verbinder-Port (302) entspricht, wobei das Verfahren (600) Folgendes aufweist:
Begrenzen (602) einer ersten Spannung an dem Signalknoten (306) auf eine zweite Spannung mit einer ersten Transientenschutzschaltung (314) ansprechend darauf, dass die erste Spannung eine Klemmspannung der ersten Transientenschutzschaltung (314) überschreitet, wobei die erste Transientenschutzschaltung zwischen den Signalknoten (306) und einen Referenzpotenzialknoten (312) gekoppelt ist;
Vergleichen (604), mit einer Steuerschaltung (316, 516), der zweiten Spannung mit einer Referenzspannung, wobei die Steuerschaltung einen Eingang (323, 523) hat, der an den Signalknoten (306) gekoppelt ist und einen ersten Ausgang (324, 536) hat, der an einen Steuereingang eines ersten Schaltelementes (304) gekoppelt ist, wobei das erste Schaltelement (304) einen ersten Anschluss hat, der an den Verbinder-Port (302) gekoppelt ist, einen zweiten Anschluss hat, der an den Signalknoten (306) gekoppelt ist, und parallel zu einem ersten resistiven Element bzw. Widerstandselement (308) gekoppelt ist; und
Öffnen (606) des ersten Schaltelementes mit der Steuerschaltung (316, 516) basierend auf dem Vergleich;
wobei:
die Steuerschaltung (316, 516) Teil eines integrierten Schaltkreises bzw. IC (IC = integrated circuit) ist;
das erste Schaltelement (304) extern zu dem IC ist;
der Signalknoten (306) einen Pin des IC aufweist;
wobei das Verfahren zum Vorsehen von Überspannungsschutz nur einen einzigen zusätzlichen Pin (326) des IC für den Überspannungsschutz des Verbinder-Ports (302) nutzt; und
der einzelne zusätzliche Pin (326) zwischen den ersten Ausgang (324, 536) der Steuerschaltung (316, 516) und den Steuereingang des ersten Schaltelementes (304) gekoppelt ist.

13. Verfahren nach Anspruch 12, das weiter Begrenzen einer dritten Spannung an dem Steuereingang des ersten Schaltelementes auf eine vierte Spannung mit einer zweiten Transientenschutzschaltung aufweist, die zwischen den Steuereingang des ersten Schaltelementes und den Referenzpotenzialknoten gekoppelt ist, und zwar ansprechend darauf, dass die dritte Spannung eine Klemmspannung der zweiten Transientenschutzschaltung überschreitet.

14. Verfahren nach Anspruch 12, das weiter Schließen (608), mit der Steuerschaltung, eines zweiten Schaltelementes basierend auf dem Vergleich aufweist, wobei das zweite Schaltelement in Reihe mit einem zweiten resistiven Element zwischen den Signalknoten und den Referenzpotenzialknoten gekoppelt ist, und wobei ein zweiter Ausgang der Steuerschaltung an einen Steuereingang des zweiten Schaltelementes gekoppelt ist; und
wobei Schließen des zweiten Schaltelementes Schließen des zweiten Schaltelementes basierend darauf aufweist, dass der Vergleich detektiert, dass eine Größe der zweiten Spannung größer als oder gleich einer Größe der Referenzspannung ist.

15. Verfahren nach Anspruch 12, wobei das Vergleichen Vergleichen, mit einem Komparator, der zweiten Spannung mit der Referenzspannung aufweist, wobei der Komparator einen ersten Eingang hat, der an den Signalknoten gekoppelt ist, einen zweiten Eingang hat, der die Referenzspannung empfängt, und einen Ausgang hat, der an den ersten Ausgang der Steuerschaltung gekoppelt ist; und wobei Öffnen des ersten Schaltelementes Anlegen eines invertierten Ausgangs des Komparators an den Steuereingang des ersten Schaltelementes aufweist; oder
wobei sich die Referenzspannung von einer Haltespannung der ersten Transientenschutzschaltung unterscheidet; oder
wobei Begrenzen der ersten Spannung Begrenzen der ersten Spannung auf die zweite Spannung weiter mit einer Transientenspannungsbegrenzungs- bzw. TVS-Diode (TVS = transient voltage suppression) aufweist, die zwischen den ersten Anschluss des ersten Schaltelementes und den Referenzpotenzialknoten gekoppelt ist; oder
das weiter Schließen, mit der Steuerschaltung, des ersten Schaltelementes basierend auf einem weiteren Vergleich zwischen der zweiten Spannung und der Referenzspannung aufweist, wobei die zweite Spannung für den weiteren Vergleich durch das erste resistive Element abgefühlt wird, das parallel zu dem ersten Schaltelement gekoppelt ist; oder
wobei Öffnen des ersten Schaltelementes Öffnen des ersten Schaltelementes basierend darauf aufweist, dass der Vergleich detektiert, dass eine Größe der zweiten Spannung größer als oder gleich einer Größe der Referenzspannung ist.

## Revendications

1. Circuit (300) de protection contre des surtensions, OVP, d'un nœud de signal (306) correspondant à un port de connecteur (302), le circuit OVP (300) comprenant :
un premier commutateur (304) ayant une première borne destiné au couplage au port de connecteur (302) et ayant une deuxième borne destiné au couplage au nœud de signal (306), dans lequel le premier commutateur (304) est, en fonctionnement, relié entre le port de connecteur (302) et le nœud de signal (306) ;
un premier élément résistif (308) relié en parallèle avec le premier commutateur (304) ;
un premier circuit de protection contre les transitoires (314) relié entre le nœud de signal (306) et un nœud de potentiel de référence (312) ; et
un circuit de commande (316, 516) ayant une entrée reliée (323, 523) au nœud de signal (306) et ayant une première sortie (324, 536) reliée à une entrée de commande du premier commutateur (304) ;
dans lequel :
le circuit de commande (316, 516) fait partie d'un circuit intégré, IC ;
le premier commutateur (304) est externe à l'IC ;
le nœud de signal (306) est relié à une broche de l'IC ;
le circuit OVP (300) ne comprend qu'une seule broche supplémentaire (326) de l'IC pour la protection contre des surtensions du port de connecteur (302) ; et
la seule broche supplémentaire (326) est reliée entre la première sortie (324, 536) du circuit de commande (316, 516) et l'entrée de commande du premier commutateur (304).

2. Circuit OVP selon la revendication 1, comprenant en outre un deuxième circuit de protection contre des transitoires (328) relié entre l'entrée de commande du premier commutateur et le nœud de potentiel de référence ; et
dans lequel au moins un parmi le premier circuit de protection contre des transitoires ou le deuxième circuit de protection contre des transitoires comprend une limitation à relance ; ou
dans lequel au moins un parmi le premier circuit de protection contre des transitoires ou le deuxième circuit de protection contre des transitoires comprend au moins une diode reliée en série avec un circuit de limitation résistif-capacitif, RC.

3. Circuit OVP selon la revendication 1, comprenant en outre un deuxième élément résistif et un deuxième commutateur reliés en série entre le nœud de signal et le nœud de potentiel de référence, dans lequel une deuxième sortie du circuit de commande est reliée à une entrée de commande du deuxième commutateur ; et
dans lequel le premier élément résistif a une première résistance qui est supérieure d'au moins un ordre de grandeur à la deuxième résistance du deuxième élément résistif.

4. Circuit OVP selon la revendication 1, dans lequel le circuit de commande comprend un comparateur (318) ayant une première entrée reliée au nœud de signal, ayant une deuxième entrée reliée à un nœud de tension de référence et ayant une sortie reliée à la première sortie du circuit de commande.

5. Circuit OVP selon la revendication 4, dans lequel le circuit de commande comprend en outre un inverseur ayant une entrée reliée à la sortie du comparateur et ayant une sortie reliée à la première sortie du circuit de commande ; et
comprenant en outre un deuxième élément résistif et un deuxième commutateur reliés en série entre le nœud de signal et le nœud de potentiel de référence, dans lequel la sortie du comparateur est reliée à une entrée de commande du deuxième commutateur.

6. Circuit OVP selon la revendication 4, dans lequel l'amplitude d'une tension de référence au niveau du nœud de tension de référence est inférieure à l'amplitude d'une tension de maintien du premier circuit de protection contre des transitoires.

7. Circuit OVP selon la revendication 1, dans lequel le port de connecteur est un port USB-C ; et
dans lequel le port USB-C est un port à paire différentielle positive, DP, un port à paire différentielle négative, DN, ou un port à utilisation de bande latérale, SBU.

8. Circuit OVP selon la revendication 1, dans lequel le circuit OVP ne comporte pas de ligne de détection reliée à un nœud entre la première borne du premier commutateur et le port de connecteur ; ou
dans lequel le premier commutateur comprend un transistor métal-oxyde-semiconducteur de type n, NMOS, ayant un drain comme première borne du premier commutateur, ayant une source comme deuxième borne du premier commutateur et ayant une grille comme entrée de commande du premier commutateur ; ou
dans lequel une tension de claquage du transistor NMOS est d'au moins 20 V.

9. Circuit OVP selon la revendication 1, dans lequel le premier élément résistif est externe à l'IC ; ou
dans lequel le premier circuit de protection contre des transitoires est interne à l'IC.

10. Circuit OVP selon la revendication 1, comprenant en outre une diode de suppression de tension transitoire, TVS, reliée entre la première borne du premier commutateur et le nœud de potentiel de référence.

11. Circuit OVP selon la revendication 1, dans lequel le circuit de commande comprend :
une porte logique OU ayant une sortie reliée à la première sortie du circuit de commande ;
un premier comparateur ayant une première entrée reliée au nœud de signal, ayant une deuxième entrée reliée à un premier nœud de tension de référence, et ayant une sortie reliée à une première entrée de la porte logique OU ; et
un deuxième comparateur ayant une première entrée reliée au nœud de signal, ayant une deuxième entrée reliée à un deuxième nœud de tension de référence et ayant une sortie reliée à une deuxième entrée de la porte logique OU.

12. Procédé (600) de fourniture d'une protection contre des surtensions entre un port de connecteur (302) et un nœud de signal (306) correspondant au port de connecteur (302), le procédé (600) comprenant :
la suppression (602) d'une première tension au niveau du nœud de signal (306) à une deuxième tension avec un premier circuit de protection contre des transitoires (314), en réponse au dépassement par la première tension d'une tension de limitation du premier circuit de protection contre des transitoires (314), dans lequel le premier circuit de protection contre des transitoires est relié entre le nœud de signal (306) et un nœud de potentiel de référence (312) ;
la comparaison (604), avec un circuit de commande (316, 516), la deuxième tension à une tension de référence, le circuit de commande ayant une entrée reliée (323, 523) au nœud de signal (306) et ayant une première sortie (324, 536) reliée à une entrée de commande d'un premier commutateur (304), dans lequel le premier commutateur (304) a une première borne reliée au port de connecteur (302), a une deuxième borne reliée au nœud de signal (306) et est relié en parallèle à un premier élément résistif (308) ; et
l'ouverture (606) du premier commutateur avec le circuit de commande (316, 516) sur la base de la comparaison ;
dans lequel :
le circuit de commande (316, 516) fait partie d'un circuit intégré, IC ;
le premier commutateur (304) est externe à l'IC ;
le nœud de signal (306) comporte une broche de l'IC ;
le procédé de fourniture d'une protection contre des surtensions n'utilise qu'une seule broche supplémentaire (326) de l'IC pour la protection contre des surtensions du port de connecteur (302) ; et
la seule broche supplémentaire (326) est reliée entre la première sortie (324, 536) du circuit de commande (316, 516) et l'entrée de commande du premier commutateur (304).

13. Procédé selon la revendication 12, comprenant en outre la suppression d'une troisième tension à l'entrée de commande du premier commutateur à une quatrième tension avec un deuxième circuit de protection contre des transitoires relié entre l'entrée de commande du premier commutateur et le nœud de potentiel de référence, en réponse au dépassement par la troisième tension d'une tension de limitation du deuxième circuit de protection contre des transitoires.

14. Procédé selon la revendication 12, comprenant en outre la fermeture (60), avec le circuit de commande, d'un deuxième commutateur sur la base de la comparaison, dans lequel le deuxième commutateur est relié en série avec un deuxième élément résistif entre le nœud de signal et le nœud de potentiel de référence et dans lequel une deuxième sortie du circuit de commande est reliée à une entrée de commande du deuxième commutateur ; et
dans lequel la fermeture du deuxième commutateur comprend la fermeture du deuxième commutateur sur la base de la comparaison qui détecte que l'amplitude de la deuxième tension est supérieure ou égale à l'amplitude de la tension de référence.

15. Procédé selon la revendication 12, dans lequel la comparaison comprend la comparaison, avec un comparateur, de la deuxième tension avec la tension de référence, le comparateur ayant une première entrée reliée au nœud de signal, ayant une deuxième entrée recevant la tension de référence et ayant une sortie reliée à la première sortie du circuit de commande ; et dans lequel l'ouverture du premier commutateur comprend l'application d'une sortie inversée du comparateur à l'entrée de commande du premier commutateur ; ou
dans lequel la tension de référence est différente de la tension de maintien du premier circuit de protection contre des transitoires ; ou
dans lequel la suppression de la première tension comprend la suppression de la première tension à la deuxième tension en plus avec une diode de suppression de tension transitoire, TVS, reliée entre la première borne du premier commutateur et le nœud de potentiel de référence ; ou
comprenant en outre la fermeture, avec le circuit de commande, du premier commutateur sur la base d'une autre comparaison entre la deuxième tension et la tension de référence, dans laquelle la deuxième tension pour l'autre comparaison est détectée au moyen du premier élément résistif relié en parallèle avec le premier commutateur ; ou
dans lequel l'ouverture du premier commutateur comprend l'ouverture du premier commutateur sur la base du fait que la comparaison détecte que l'amplitude de la deuxième tension est supérieure ou égale à l'amplitude de la tension de référence.
